# EUROPÄISCHE PATENTANMELDUNG

(11) **EP 1 498 032 A1**
(43) Veröffentlichungstag der Anmeldung: **19.01.2005**
(21) Anmeldenummer: 04460029.4
(22) Anmeldetag: 30.06.2004
(51) Int. Cl.: A21C 7/01

(54) **Backmaschine**

(30) Priorität: 12.07.2003 PL 36124003
(71) Anmelder: Wieczorek Maciej - Produkcja Maszyn, 63 - 800 Gostyn (PL)
(72) Erfinder: Wieczorek, Maciej, 63-800 Gostyn (PL)

(57) **Zusammenfassung**

Die Maschine nach der Erfindung ist dadurch gekennzeichnet , dass sie ein Komlex miteinander zusammenarbeitender Vorrichtungen ist , gebildet durch eine Entspannungsvorrichtung (1) und einen Langwirker (2) , die auf einem gemeinsamen Gestell (3) liegen sowie durch einen Aufnehmer (4), mit einem außerhalb des Gestells (3) hervorragenden Transportband (5) versehen.

Die Maschine ist mit einem Steuerpult (18) versehen und die Vorrichtungen (1 , 2 , 4) besitzen eigene Antriebe (M1, M2 , M3) , die die unabhängige Arbeit der einzelnen Vorrichtungen ermöglichen .

Die Entspannungsvorrichtung (1) ist über dem Langwirker (2) und das Transportband (5) des Aufnehmers (4) hinter dem Langwirker (2) angebracht .

Das Gestell (3) besitzt einen Teil (17) , in dem die herausnehmbare Behälter (13) angebracht sind.

Die Entspannungsvorrichtung (1) ist mit einem Mehlstreuer (8) und hinter ihm angeordneten Langwirker (10) versehen , die zu den Transporteursflanken (6) angebracht sind .

## Beschreibung

Die Erfindung betrifft eine Backmaschine .

In den bisher bekannten Brotfertigungsstraßen werden die einzelnen Vorrichtungen der Reihe nach in einer technologischen Folge montiert , in der sich die Entspannungsvorrichtung hinter dem Teigteiler und vor dem Langwirker befindet , zu dem Langwirker dagegen wird von der Ausgangsseite der Teigwarenstücke der Aufnahmetisch befestigt .

Die vom Teigteiler gelieferten Teigwarenstucke werden zuerst entspannt und dann gedehnt . Die oben erwähnten Tätigkeiten werden in verschiedenen Vorrichtungen gemacht . Die gedehnten Teigwarenstucke gelangen auf den Aufnahmetisch , von dem sie zur weiteren Verarbeitung herangeführt werden . Auf diesem Tisch kann die Oberfläche der geformten Teigwarenstücke konfektioniert , dh. mit Mohn bestreut werden.

Jede diese Vorrichtung wird mit einem eigenen Antrieb und einem Steuerpult zur Arbeitsregelung versehen .

Die in eine Fertigungsstraße zusammengesetzen Vorrichtungen nehmen in der Bäckerei viel Produktionsfläche ein , und die Steuerung der Arbeit jeder Vorrichtung für sich bildet zusätzliche Belastung für den Bedienungspersonal .

Um oben erwähnte Schwierigkeiten zu vermeiden ist eine Maschine erfunden worden , die alle gennaten Tätigkeiten in einer intergrierten Vorrichtung ermöglicht.

Die Backmaschine ist dadurch gekennzeichnet , dass sie ein aus einer Entspannungsvorrichtung und aus einem Langwirker auf einem gemeinsamen Gestell und aus einem mit dem außerhalb des Gestells hervorragenden Transportband versehenen Aufnehmer bestehendes Komplex miteinander zusammnearbeitenden Vorrichtungen bildet . Die einzelnen Bestandteile dieser Backmaschine haben eigene Antriebe. Die Maschine wird mit einem die Arbeit aller Bestandteile regelenden Steuerpult versehen.

Die Entspannungsvorrichtung ist über dem Langwirker befestigt und das Transportband des Aufnehmers hinter dem Transportband des Langwirkers angebracht.

Das Gestell besteht aus einem mit der Verkleidung umbauten Rahmen und ist mit einem Teil versehen , in dem sich die herausnehmbaren Behälter befinden .

Die Entspannungsvorrichtung hat mindestens ein zum Gestell des Langwirkers befestigten Transportband zum Heranführen von Teigwarenstücken und ist mit einem von der Eingangsseite des Transporteurs gelegenen Mehlstreuer versehen , der auf dem zu den Transporteursflanken befestigten Tragarm angebracht ist . In einem Typ der Maschine ist hinter dem Mehlstreuer ein auch zu den Transporteursflanken befestigter Langwirker angebracht , in dem anderen Typ dagegen ist die Entspannungsvorrichtung nicht mit dem Langwirker versehen.

Das Steuerpult der Vorrichtung ist auf einem zum Rahmen von der Seite des Aufnahmetransporteurs befestigten beweglichen Ausleger angebracht . Das Transportband des Aufnehmers ist im ersten Vorrichtungstyp beweglich , im zweiten dagegen unbeweglich und darauf ist ein herausnehmbares Behälter angebracht . In diesem Fall ist zwischen der Entspannungsvorrichtung und dem Transportband eine herausnehmbare Rinne befestigt.

Nach der Erfindung ermöglicht der komplexe Maschinenbau die Entspannung und Dehnung der vorher vom Teigteiler herangeführten Teigwarenstücke , deren Aufnahme und Konfektionierung .

Ein Steuerpult ermöglicht gleichzeitige Regelung der Arbeit von drei in der Maschine eingesetzen Vorrichtungen . Es gibt die Möglichkeit die Arbeit in zwei Gängen durchzuführen , dh. im ersten Gang werden die Teigwarenstücke entspannt , gedehnt und zur weitem Verarbeitung aufgenommen oder im zweiten , der in der Entspannung , Dehnung und Konfektionierung der geformten Teigwarenstücke besteht .

Der kmpakte Bau der aus intergrierten Vorrichtungen zusammengesetzten Maschine hat zu Folge , dass sie sehr wenig Produktionsfläche einnimmt und sich günstig in der Bäckerei aufstellen läßt.

In der Zeichnung ist ein Ausführungsbeispiel des Erfindungsgegenstandes schematisch dargestellt und wird nachstehend näher erläutert .

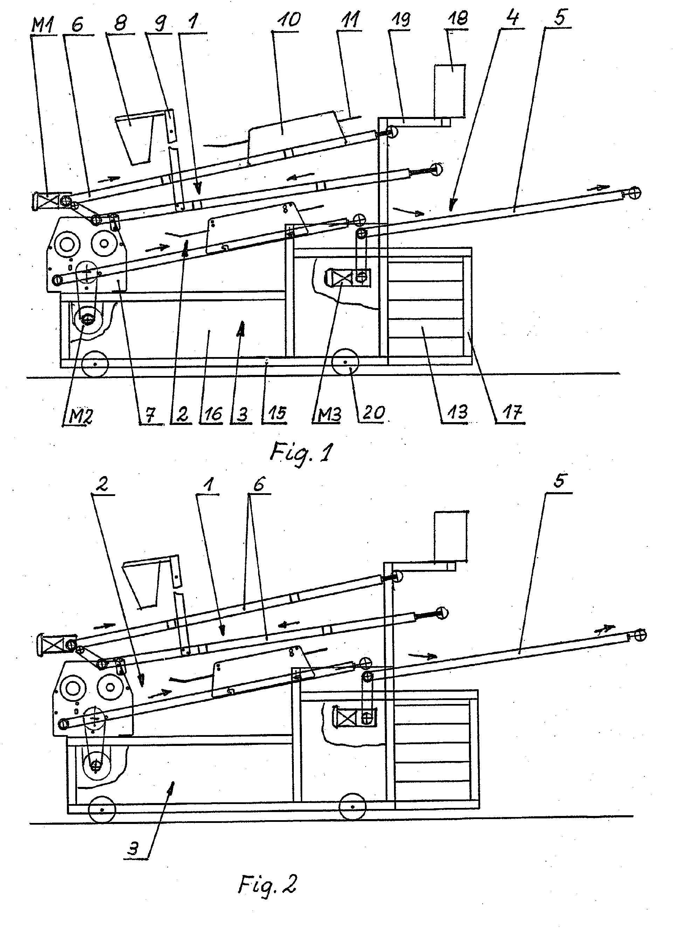

Figur 1 - stellt die Maschine mit dem beweglichen Transportband und mit dem auf dem Transporteur der Entspannungsvorrichtung angebrachten Langwirker dar ,
Figur 2 - die Maschine mit dem beweglichen Transportband aber ohne angebrachten Langwirker ,
Figur 3 - die Maschine mit dem unbeweglichen Transportband,

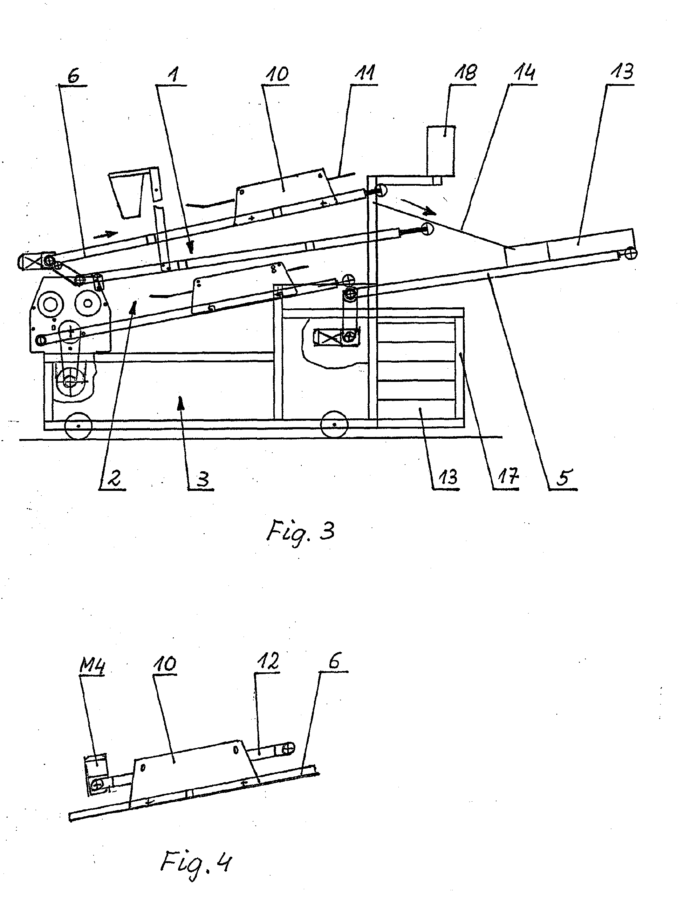

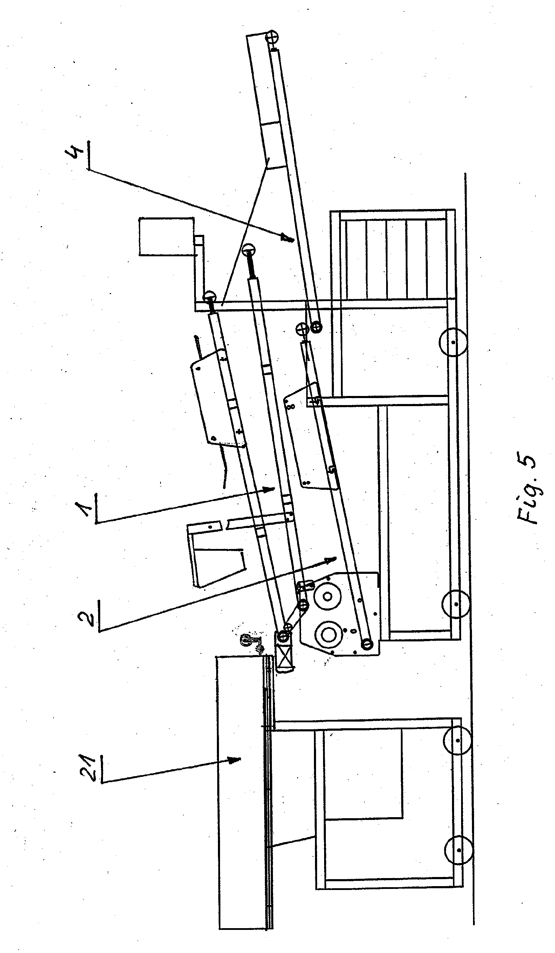

Figur 4 - ein Teil des Transporteurs der Entspannungsvorrichtung mit dem darauf angebrachten Langwirker mit einem beweglichen Transportband versehen, Figur 5 - die mit einem Teigteiler zusammengesetzte Maschine.

Nach der Erfindung ist die Backmaschine ein Komplex der miteinander zusammenarbeitenden Vorrichtungen , gebildet durch eine Entspannungsvorrichtung 1 und einen Langwirker 2 , die auf einem gemeinsamen Gestell 3 liegen und einen Aufnehmer 4 , dessen Transportband 5 außerhalb des Gestells 3 hervorragt .

Die Entspannungsvorrichtung 1 ist über dem Langwirker 2 angebracht und das Transportband 5 des Aufnehmers 4 ist hinter dem Langwirker 2 gelegen .

Die Entspannungsvorrichtung 1 ist mit zwei Transporteur 6 zum

Heranführen der Teigwarenstücke versehen , von denen der untere zum Gestell 7 des Langwirkers 2 befestigt ist . Von der Eingangsseite der Entspannungsvorrichtung 1 befindet sich ein Mehlstreuer 8 , der auf einem Tragarm 9 zu den Transporteursflanken 6 angebracht ist , dazu kann ein Langwirker 10 gelegen hinter dem Mehlstreuer 8 auch zu den Transporteursflanken 6 angebracht werden . Die Entspannungsvorrichtung 1 ist mit einem eigenen Antrieb M1 mit stetiger Regelung versehen .

Der zur Entspannungsvorrichtung 1 gehörende Langwirker 10 hat eine Platte 11 mit einstellbarer Lage gegenüber dem Transporteur oder ist mit einem beweglichen Transportband 12 mit einstellbarer Lineargeschwindigkeit versehen und durch den Antrieb M4 angetrieben.

Der Langwirker 2 ist mit einem eigenen Antrieb M2 versehen .

Das Transportband 5 des Aufnehmers 4 hat einen eigenen Antrieb M3 und im ersten Typ der Maschine ist es beweglich .

Im anderen Typ ist das Transportband 5 unbeweglich ( der Antrieb M3 ist abgeschaltet ) und mit einem herausnehmbaren auf dem Transportband 5 angebrachten Behälter 13 versehen . In diesem Typ ist zwischen dem Transporteur 6 der Entspannungsvorrichtung 1 und dem auf dem Transportband 5 liegenden Behälter 13 eine herausnehmbare Rinne 14 angebracht .

Das Gestell 3 ist aus einem mit Verkleidungen 16 umbauten Rahmen 15 zusammengesezt und besitzt einen Teil 17, in dem die auf das unbewegliche Transportband 5 eingesetzten Behälter 13 angebracht sind.

Die Backmaschine ist mit einem Steuerpult 18 versehen , der auf einem zum Gestell 3 befestigten Ausleger 19 angebracht ist. Zum Gestell 3 sind von unten die Laufräder 20 befestigt .

Die Maschine aufgestellt z.B. in einer Montagestraße hinter dem Teigteiler 21 kann in zwei Gängen arbeiten.

Im ersten Gang werden die Teigwarenstücke vom Teigteiler 21 über die Transporteur 6 herangeführt , auf denen das Teig enntspannt und weiter zum Langwirker 2 herangeführt wird . Nach der Dehnung fallen die Teigwarenstücke auf das bewegliche Band 5 des Aufnehmers 4 und werden zur weiteren Brotverarbeitung gebracht .

Im zweiten Gang werden die Teigwarenstücke vom Teigteiler 21 über den oberen Transporter 6 der Entspannungsvorrichtung 1 herangeführt , auf dem sie entspannt und dann in dem zum Transporteur 6 befestigten Langwirker 10 gedehnt werden . Die gedehnten Teigwarenstücke werden in der Rinne 14 zu dem auf dem unbeweglichen Transportband 5 angebrachten Behälter 13 gerutscht , wo sie konfektioniert , z.B. mit Mohn bestreut werden.

In einem Typ der Maschine ist in der Entspannungsvorrichtung 1 unabhängig vom Arbeitsgang der Maschine der Langwirker 10 montiert , der während der Arbeit im Gang ohne Konfektionierung nicht genutzt wird , während der Arbeit im Gang mit Konfektionierung dagegen werden im Langwirker 10 die Teigwarenstücke gedehnt.

In einem anderen Typ der Maschine ist der Langwirker 10 nur während der Arbeit im Gang mit Konfektionierung zum Transporter 6 montiert , in einem anderen Fall ist er demontiert .

## Patentansprüche

1. Die Backmaschine **dadurch gekennzeichnet , dass** sie ein Komlex miteinander zusammenarbeitender Vorrichtungen ist , gebildet durch eine Entspannungsvorrichtung (1) und einen Langwirker (2) , die auf einem gemeinsamen Gestell (3) liegen sowie durch einen Aufnehmer (4), mit einem außerhalb des Gestells (3) hervorragenden Transportband (5) versehen , die über eigene Antriebe ( M1 , M2 , M3 ) verfügen , dabei ist die Maschine mit einem die Arbeit der Vorrichtungen ( 1 , 2 , 3 ) regelenden Steuerpult (18) versehen , die Entspannungsvorrichtung (1) dagegen ist über dem Langwirker (2) und das Transportband (5) des Aufnehmers (4) hinter dem Langwirker (2) angebracht.

2. Die Maschine nach Anspruch 1 , **dadurch gekennzeichnet , dass** das Gestell (3) aus einem mit Verkleidungen (16) umbauten Rahmen (15) zusammengesetzt ist und einen Teil (17) besitzt , in dem sich die herausnehmbaren Behälter (13) befinden.

3. Die Maschine nach Anspruch 1 , **dadurch gekennzeichnet , dass** die Entspannungsvorrichtung (1) mindestens mit einem zum Gestell (7) des Langwirkers (2) angebrachten Transporteur (6) , am günstigsten mit zwei , und mit einem von der Eingangsseite des Transporteurs (6) gelegenen und auf einem zu den Transporteursflanken (6) befestigten Tragarm (9) Mehlstreuer (8) versehen ist .

4. Die Maschine nach Anspruch 1 , **gekennzeichnet dadurch , dass** die Entspannungsvorrichtung (1)mindestens mit einem zum Gestell (7) des Langwirkers (2) befestigten Transporteur (6), am günstigsten mit zwei , und mit einem von der Eingangsseite des Transporteurs (6) auf einem zu den Transporteursflanken (6) befestigten Tragarm (9) Mehlstreuer (8) , sowie mit einem darauf gelegenen und zu den Transporteursflanken (6) befestigten Langwirker (10) versehen ist.

5. Die Maschine nach Anspruch 1 , **gekennzeichnet dadurch , dass** das Steuerpult (18) auf einem zum Rahmen (15) von der Seite des Transportbandes (5) des Aufnehmers (4) angebracht ist.

6. Die Maschine nach Anspruch 1 , **gekennzeichnet dadurch , dass** das Transportband (5) des Aufnehmers (4) unbeweglich ist.

7. Die Maschine nach Anspruch 1 , **gekennzeichnet dadurch , dass** das Transportband (5) des Aufnehmers (4) beweglich ist und darauf sich ein herausnehmbares Behälter (13) befindet , dabei zwischen dem Transporteur (6) der Entspannungsvorrichtung (1) und dem Behälter (13) eine herausnehmbare Rinne (14) angebracht ist .
